# EUROPEAN PATENT SPECIFICATION

(11) **EP 3 064 408 B1**
(45) Date of publication and mention of the grant of the patent: **31.01.2018**
(21) Application number: 16158783.7
(22) Date of filing: 04.03.2016
(51) Int. Cl.: B60T 13/16, B60T 15/02, B60T 15/18

(54) **DEVICE FOR CONTROLLING THE BRAKING OF A TRAILER**
ANHÄNGERBREMSSTEUERGERÄT
DISPOSITIF DE REGLAGE DE FREINAGE DE REMORQUE

(30) Priority: 04.03.2015 IT MO20150046
(43) Date of publication of application: 07.09.2016
(73) Proprietor: Studio Tecnico 6 M S.R.L., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- EP-A1- 0 015 689
- WO-A1-2014/001876
- FR-A1- 2 496 577
- US-A- 3 718 373

## Description

The present invention relates to a device for controlling the braking of a trailer.

It is known that in the case of a trailer towed by a prime mover their braking systems are operatively connected in such a way that the braking of the prime mover by the operator also causes the braking of the towed trailer.

The braking system of the trailer is therefore piloted by the braking system of the prime mover in order to synchronize the braking forces acting on same.

It follows, therefore, that when the operator operates the brake pedal of the prime mover, this operates on the wheels of same and, by means of a braking valve (called trailer-brake valve), also on the braking system of the trailer.

The devices for braking a trailer of known type generally comprise a hollow body wherein are defined a plurality of gaps, among which a work fluid supply gap, a work fluid exhaust gap and a gap connectable to the positive braking system of the trailer. Inside this hollow body, a distributor element is housed sliding, able to selectively place the braking gap in communication with the supply gap or the exhaust gap.

As known, to date the towing vehicles are connected to the respective trailer by means of a connecting device comprising a male joint associated with the towing vehicle and a corresponding female joint associated with the trailer.

More particularly, such connecting device allows to place the braking system of the towing vehicle in communication with the positive braking system of the trailer, so that the braking of the towing vehicle by the operator also causes the braking of the towed trailer.

The braking system of the trailer is therefore piloted by the braking system of the prime mover in order to synchronize the braking forces acting on same.

Some recent regulations provide that the connecting device between the towing vehicle and its trailer has a pair of male joints able to insert themselves inside a pair of relative female joints.

In particular, the female joints are connectable to a control line able to supply the braking system of the trailer, and to an additional line able to disable the automatic and/or parking brake of the trailer itself, respectively. In emergency situations, the additional line must be suitably connected to a drainage tank so as to allow the operation of the automatic and/or parking brake of the trailer and, therefore, the braking of same.

A device for braking a trailer is known from WO 2014/001876.

The main aim of the present invention is to provide a device for controlling the braking of a trailer which allows at the same time to perform the functions of a trailer-brake valve and of managing the additional line in emergency situations.

Within this aim, one object of the present invention is to allow the operation of the automatic and/or parking brake of the trailer also in the event of, following the turning off of the engine of the towing vehicle, the pressure along the additional line does not reset thus leaving the trailer without brakes.

Another object of the present invention is to allow the operation of the automatic and/or parking brake of the trailer also in the event of no power supply in the trailer-brake valve.

Yet another object of the present invention is to allow the intervention of the automatic and/or parking brake of the trailer after a predefined time in the event of a breakage occurring along the control line.

A further object of the device to which the present invention refers is to allow the mechanical command of both the service braking and the emergency braking of the trailer.

Another object of the present invention is to provide a device for controlling the braking of a trailer which allows to overcome the mentioned drawbacks of the prior art within the ambit of a simple, rational, easy, effective to use and affordable solution.

The above mentioned objects are achieved by the present device for controlling the braking of a trailer according to claim 1.

Other characteristics and advantages of the present invention will become better evident from the description of a preferred, but not exclusive, embodiment of a device for controlling the braking of a trailer, illustrated by way of an indicative but non-limiting example in the accompanying drawings, wherein:

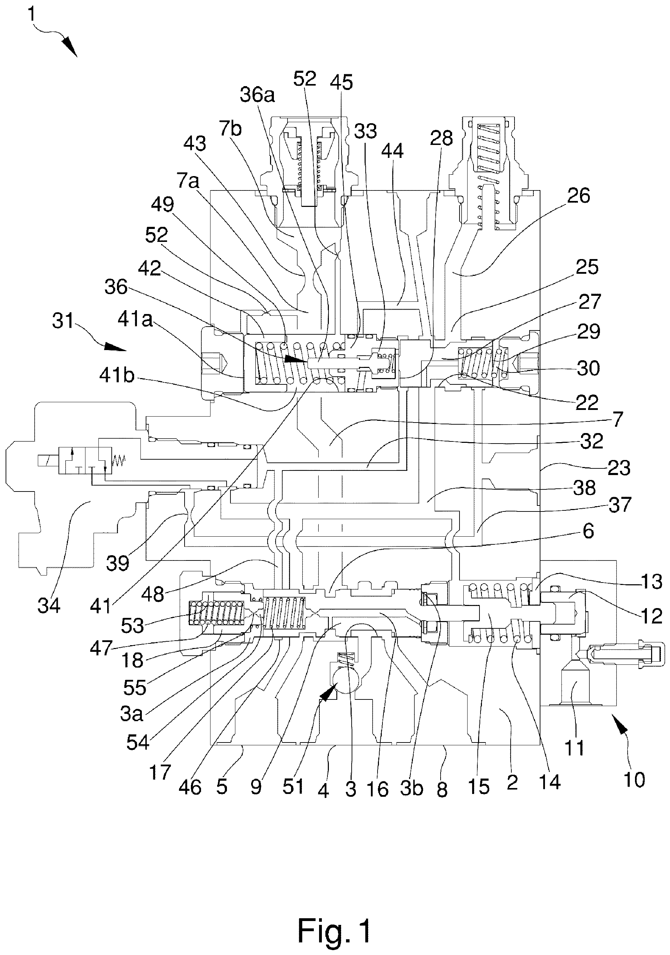

Figures 1 to 5 are sectional views of alternative embodiments of a device according to the invention.

With particular reference to such illustrations, reference number 1 globally indicates a device for controlling the braking of a trailer.

The device 1 comprises a body 2 wherein is formed at least a first seat 3 communicating with at least a main gap 4 connectable to a source of a work fluid at a first pressure, with at least an exhaust gap 5 of the work fluid, and with at least a braking gap 6 communicating with at least a first line 7 connectable to the braking system of a trailer.

Advantageously, at the main gap 4 unidirectional valve means are arranged, identified in the illustrations by the reference number 51, able to prevent the return of the work fluid towards the supply source of same.

In the embodiment shown in the illustrations, the first seat 3 is also communicating with at least a service gap 8 connectable to at least an external user point or in exhaust mode and/or with a load-sensing gap (not shown in the illustrations). Such service gap 8 can be closed in the event of the work fluid being supplied by means of a variable flow rate pump.

In a further embodiment, not shown in the illustrations, the first seat 3 can also be communicating with a load-sensing port.

Within the first seat 3 is housed in a sliding manner a first distributor element 9, which is movable between at least an idle position, wherein the braking gap 6 is placed in communication with the exhaust gap 5, and at least a braking position, wherein the main gap 4 is placed in communication with the braking gap 6, so as to send the work fluid under pressure to the braking system of the trailer.

In the embodiments shown in the illustrations, the main gap 4 is placed in communication with the service gap 8 with the first distributor element 9 in the idle position.

Piloting means 10 are also provided of the first distributor element 9 connectable to the braking system of a towing vehicle.

The piloting means 10 comprise a piloting channel 11 connectable to the brake pump of the towing vehicle and acting on a piloting element 12 which in turn is able to interact with the first distributor element 9.

More particularly, the piloting element 12 is arranged resting against a thrust element 13 which acts, by means of elastic means 14, on a connecting element 15 which in turn is able to interact with the first distributor element 9.

The elastic means 14 are therefore able to apply a predefined force on the first distributor element 9 following the increase in pressure in the piloting channel 11 and, therefore, following the shift of the piloting element 12.

The first distributor element 9 has a reaction surface communicating with the braking gap 6 and which acts in the opposite direction to the piloting means 10.

In the embodiments shown in the illustrations, inside the first seat 3 are defined two chambers, of which a first chamber 3a and a second chamber 3b, which act on the first distributor element 9 from opposite sides of same. As can be seen in the illustrations, the first chamber 3a acts on the first distributor element 9 on the opposite side with respect to the piloting means 10.

The chambers 3a and 3b are both communicating with the braking gap 6. More in detail, the chambers 3a and 3b are mutually communicating through a channel 16 obtained inside the first distributor element 9 and have mutually different thrust areas, the difference in which defines the above-mentioned reaction surface.

The first distributor element 9 then moves from the idle position to the braking position in contrast to elastic means 17 arranged on the opposite side of the elastic means 14 with respect to the first distributor element itself.

More particularly, the elastic means 17 are housed inside the first chamber 3a and are interposed between the first distributor element 9 and an abutment element 18 arranged at the bottom of the first seat 3.

The device 1 also comprises mechanical control means 19, operable to control the shift of the first distributor element 9 from the idle position to the braking position.

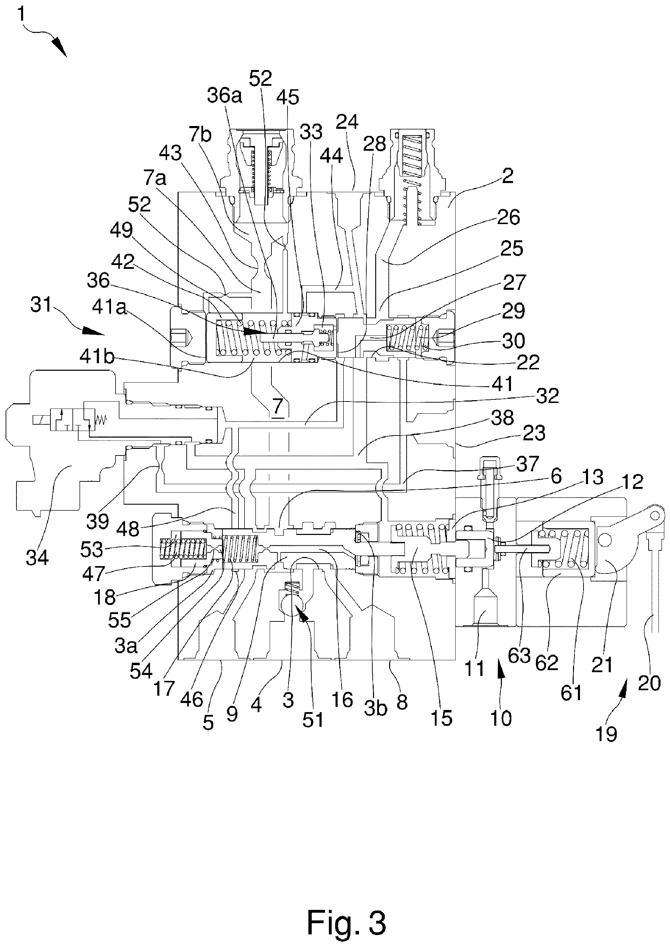

In the embodiment shown in figure 3, the control means 19 comprise at least a lever 20 arranged externally to the body 2, connectable to the parking brake of the towing vehicle and able to interact with the first distributor element 9.

More particularly, the lever 20 acts on a cam element 21 which has a tooth able to interact with the piloting element 12 by means of intermediate elastic means 61 not preloaded or having a preload below the elastic means 14. The intermediate elastic means 61 allow obtaining a command proportionate to the stroke of the lever 20.

In the embodiment shown in figure 3, the cam element 21 is arranged outside the body 2 and interacts with a cup-shaped element 62 inside which the intermediate elastic means 61 are housed which in turn interact with the piloting element 12 by means of a roller 63.

The lever 20 is therefore movable between a first work position, wherein the first distributor element 9 is free to move, and a second work position, wherein the first distributor element 9 is brought to the braking position due to the action applied on it by the elastic means 14 following the shift of the thrust element 13.

According to the invention, within the body 2 is also formed a second seat 22 communicating with a secondary gap 23 connectable to a source of the work fluid at a second pressure, preferably lower than the aforementioned first pressure, with the exhaust gap 5 and with at least an additional gap 25 communicating with a second line 26 connectable to the automatic and/or parking brake of the trailer.

Within the second seat 22 is housed in a sliding manner at least a second distributor element 27 movable between a normal operating position, wherein the additional gap 25 is placed in communication with the secondary gap 23, and an emergency position, wherein the additional gap 25 is placed in communication with the exhaust gap 5 so as to allow the operation of the automatic and/or parking brake of the trailer.

On the second distributor element 27 act, on opposite sides, a thrust chamber 28 and a contrast chamber 29, where within the latter are housed elastic means 30 which are able to push the second distributor element itself towards the emergency position.

Still according to the invention, the device 1 comprises command means 31 of the shift of the second distributor element 27 from the normal operating position towards the emergency position.

Advantageously, the command means 31 comprise at least a command channel 32, 33 communicating with the thrust chamber 28, connectable to the secondary gap 23 and to the exhaust gap 5 and valve means 34, 35, 36, 9 operable to place the command channel 32, 33 in communication at least with the exhaust gap 5, so as to permit the shift of the second distributor element 27 to the emergency position.

More in particular, following the connection of the command channel 32,33 with the exhaust gap 5 due to the operation of the valve means 34,35,36,9, the pressure in the thrust chamber 28 substantially resets thus allowing the shift of the second distributor element 27 to the emergency position and, therefore, the operation of the automatic and/or parking brake of the trailer.

More in particular, the command means 31 comprise a first command channel 32 communicating with the thrust chamber 28 and connectable to the secondary gap 23 and first valve means 34 which can be operated to place the first command channel 32 in communication with at least with the exhaust gap 5.

In the embodiments shown in the Figures 1 to 4, the command means 31 also comprise, in addition to the first command channel 32 communicating with the thrust chamber 28, a supply channel 37 communicating with the secondary gap 23; the first valve means 34 are interposed between the first command channel 32 and the supply channel 37 and are operable to selectively place the first command channel 32 in communication with the supply channel 37 or with the exhaust gap 5. In this case, the first valve means 34 are of the type of a three-way valve, two of which are composed of the first command channel 32 and of the supply channel 37, whereas the third one is composed of the connecting channel 38 connecting to the exhaust gap 5.

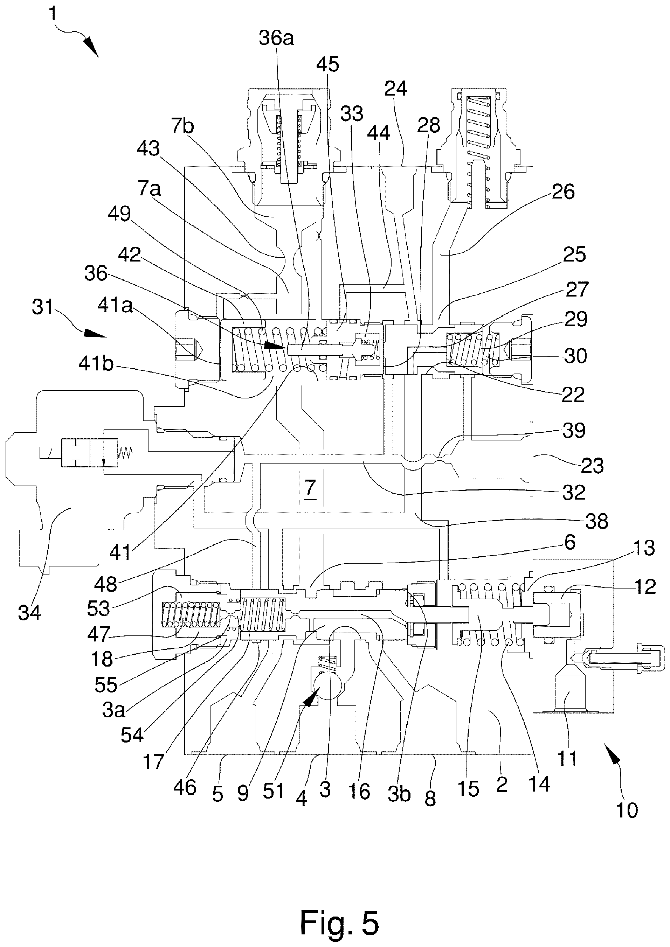

In the embodiment shown in Figure 5, on the contrary, the first command channel 32 is directly connected to the secondary gap 23. More in detail, in this embodiment, the first valve means 34 are of the type of a two-way valve, one of which is composed of the first command channel 32 and the other of the connecting channel 38 connecting to the exhaust gap 5, operable to isolate/place in communication the first command channel 32 from/with the exhaust gap 5.

In both embodiments described therein, the first valve means 34 are preferably of the type of a solenoid valve operatively connected to at least one of the engine and the parking brake of the towing vehicle and able to place the first command channel 32 in communication with the exhaust gap 5 when the engine of the towing vehicle is stationary or when the parking brake is operated, respectively.

In both embodiments, furthermore, between the secondary gap 23 and the thrust chamber 28 is interposed a narrowing 39 able to reduce the flow rate of the work fluid towards the thrust chamber itself, so as to ensure that the pressure inside it resets following the operation of the valve means 34,35,36,9, the exhaust gap 5 (and the channels connected to it) having a greater area.

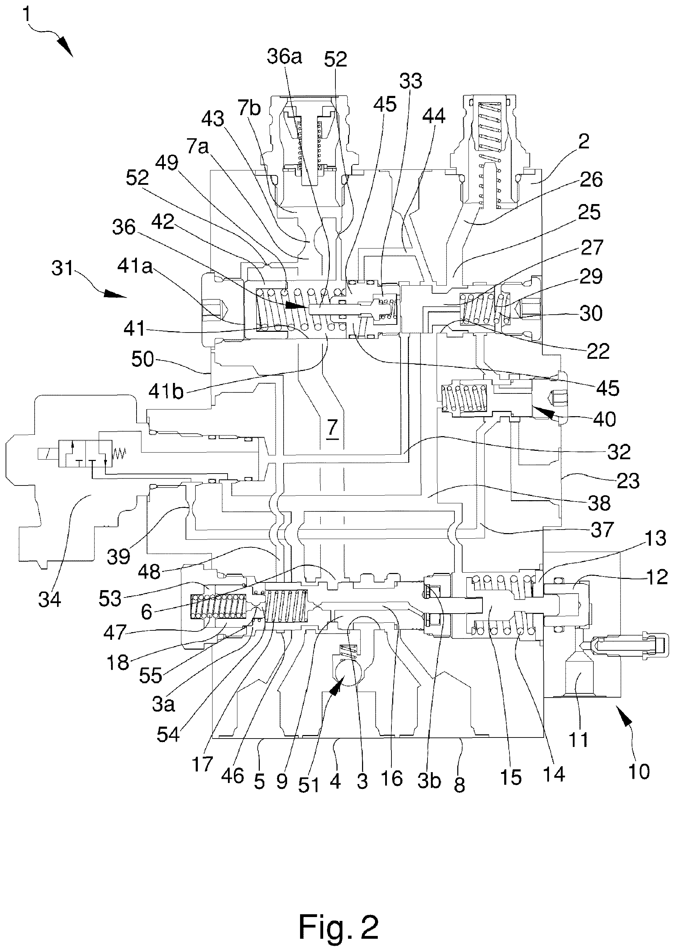

Conveniently, the device 1 also comprises pressure limiting means for limiting the pressure, identified by the reference number 40 in Figure 2, interposed between the secondary gap 23 and the second seat 22. More particularly, the pressure limiting means 40 are able to isolate the secondary gap 23 from the second seat 22 in the event of the pressure of the work fluid crossing it exceeds a predefined value.

Preferably, the command means 31 also comprise second valve means 35 manually operable by an operator to place the first command channel 32 in communication with the exhaust gap 5.

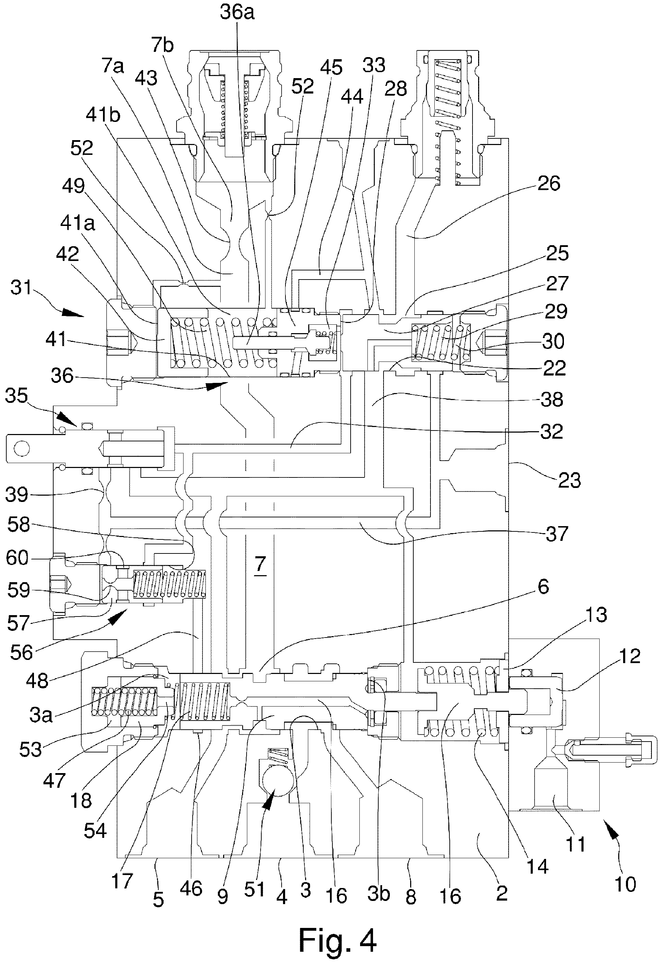

The second valve means 35 can be provided in addition or alternatively, as is the case of Figure 4, to the first valve means 34.

In this embodiment, the second valve means 35 are manually movable between a first configuration, wherein they place the supply channel 37 in communication with the first command channel 32, and a second configuration, wherein they place the first command channel itself in communication with the connecting channel 38.

The body 2 may also have an auxiliary port 50, not shown in the illustrations, communicating with the first command channel 32 and usable by an operator to connect it to an external user point in order to drain the work fluid coming from the secondary gap 23.

Advantageously, the command means 31 also comprise third valve means 36 operable to place the thrust chamber 28 in communication with the exhaust gap 5 following a pressure drop along the first line 7, e.g. caused by a breakage along the control line.

More in detail, the command means 31 comprise at least a third seat 41 formed in the body 2 and within which is housed sliding at least an actuator element 42 which splits the third seat 41 into a first chamber 41a communicating with a first length 7a of the first line 7 and into a second chamber 41b communicating with a second length 7b of the first line itself and arranged downstream of the first length 7a. Between the first and the second length 7a and 7b is conveniently interposed a calibrated orifice 43 which affects the intervention time of the actuator element 42. The actuator element 42 shifts in contrast to the elastic means 49 arranged inside the second chamber 41b.

The command means 31 also comprise a second command channel 33 communicating with the thrust chamber 28, an exhaust channel 44 communicating with the exhaust gap 5; the third valve means 36 are able to place in communication/isolate the second command channel 33 with/from the exhaust channel 44.

It is pointed out that the second command channel 33 is in communication by means of the thrust chamber 28 with the first command channel 32, the pressure of the work fluid is therefore the same. It follows therefore that the pressure inside the thrust chamber 28 resets following the exhaust connection of each of the two command channels 32, 33.

The actuator element 42 is able to shift, due to the reaching of a predefined pressure difference between the first and the second length 7a and 7b, from an inactive position, wherein it does not interact with the third valve means 36, to an active position, wherein it intervenes on the third valve means 36 to place the second command channel 33 in communication with the exhaust channel 44, so as to exhaust the work fluid contained in the thrust chamber 28 and allow the shift of the second distributor element 27 to the emergency position.

More particularly, the third valve means 36 comprise at least a shutter 36a protruding into the second chamber 41b and which is able to be intercepted by the actuator element 42 in its shift from the inactive position to the active position so as to place the second command channel 33 in communication with the exhaust channel 44.

Conveniently, the second and third seat 22 and 41 are communicating together and a separation element 45 is interposed between them and is able to isolate fluid-dynamically the seat themselves, and the shutter 36a is inserted sealed in a sliding manner inside the separation element 45.

Preferably, between the first length 7a and the first chamber 41a and/or between the second length 7b and the second chamber 41b a narrowing 52 is interposed which is able to slow down the intervention time of the actuator element 42.

More in detail, the intervention time of the actuator element 42 also depends on the stiffness of the elastic means 49, on the relevant thrust areas on which the chambers 41a and 41b act and on the length of its stroke.

Advantageously, the first seat 3 also comprises an emergency gap 46 and the first distributor element 9 has an emergency position wherein the emergency gap itself is placed in communication with the exhaust gap 5.

More particularly, in the case of no work fluid coming from the main gap 4 and, simultaneously, the operator operating the brakes of the towing vehicle thereby causing the operation of the piloting means 10 and the consequent shift of the first distributor element 9 from the idle position to the braking position, the lack of pressure in the chamber 3a able to counterbalance the force applied by the elastic means 14 entails an overrun of the first distributor element itself.

Following such overrun, the first distributor element 9 contacts the abutment element 18, on which act further elastic means 47 able to counteract the shift of the first distributor element itself towards the emergency position. The elastic means 47 are able to absorb at least part of the force applied by the elastic means 14, so as to slow down the shift of the first distributor element 9 towards the emergency position.

The further elastic means 47 are arranged inside a further chamber 53 arranged on the opposite side of the first chamber 3a with respect to the abutment element 18.

Preferably, the abutment element 18 also defines a transit channel 54 able to place the first chamber 3a in communication with the further chamber 53 and along which at least one narrowing 55 is defined.

The command means 31 also comprise at least an intermediate channel 48 communicating on one side with the emergency gap 46 and on the other side with the first command channel 32 and fourth valve means able to place the first command channel itself with the exhaust gap 5.

In this case, the fourth valve means are defined by the first distributor element 9 which, by placing the emergency gap 46 in communication with the exhaust gap 5 in its emergency position, enables the drainage of the work fluid contained in the first command channel 32.

In a particular embodiment, shown in figure 4, the command means 31 may also comprise further valve means 56 arranged along the intermediate channel 48 and able to slow down the intervention time of the automatic and/or parking brake of the trailer.

The further valve means 56 are able to shift themselves from a first position, wherein they interrupt the connection between the emergency gap 46 and the first command channel 32, and a second position, wherein they place the emergency gap 46 in communication with the first command channel itself to allow the drainage of the work fluid from the thrust chamber 28 towards the exhaust gap 5 following the reaching of the emergency position by the first distributor element 9. More particularly, the further valve means 56 comprise a further distributor element 57 housed sliding inside a further seat 58 defined in the body 2 and communicating on one side with the secondary gap 23 and on the other side with the emergency gap 46. The further distributor element 57 divides the further seat 58 into two chambers opposite one another and communicating through a narrowing 59 and also has an inner channel 60 able to place the emergency gap 46 in communication with the first command channel 32 upon reaching the second work position.

The operation of the present invention is as follows.

In normal operating conditions, as long as the brakes of the towing vehicle are not operated, the first distributor element 9 is in idle position, so that the main gap 4 is placed in communication with the service gap 8 and the braking gap 6 is placed in communication with the exhaust gap 5.

Following the operation of the brakes of the towing vehicle, due to the increasing pressure in the piloting channel 11, the piloting element 12 acts on the thrust element 13 which, by shifting, compresses the elastic means 14 which, consequently, by means of the connecting element 15, push the first distributor element 9 towards the braking position. Following the shift of the first distributor element 9 the narrowing occurs of the connection between the main gap 4 and the service gap 8, thereby causing an increase in pressure in the main gap itself. After reaching the braking position, the main gap 4 is placed in communication with the braking gap 6. The first distributor element 9 then reaches a position of equilibrium wherein the force applied by the elastic means 14 is balanced by the force due to the pressure in the chambers 3a and 3b and to the elastic means 17.

In this operating condition the fluid under pressure is conveyed to the braking system of the trailer through the first line 7.

In the event, during braking, of the engine of the towing vehicle stopping, the unidirectional valve means 51 arranged at the main gap 4 prevent the outflow of the work fluid under pressure from the braking system of the trailer towards the supply source.

In the same way or as an alternative to the command exercised by means of the piloting means 10, by operating the handbrake lever, the lever 20 moves from the first work position to the second work position consequently causing the shift of the thrust element 13 and, therefore, the braking of the trailer.

In running conditions, furthermore, the second distributor element 27 takes up a normal operating position, wherein the additional gap 25 is placed in communication with the secondary gap 23, in such a way as to maintain the automatic and/or parking brake of the trailer disabled.

In this condition, the thrust chamber 28 is connected, by means of the first command channel 32 to the secondary gap 23, so that the pressure inside it is such as to overcome the force applied by the elastic means 30.

More in detail, in the embodiment shown in the Figures 1 to 4, the first command channel 32 is placed in communication with the supply channel 37 through the solenoid valve 34 when the engine of the towing vehicle is operating whereas, following its being turned off, e.g. after a predefined time interval in case the pressure along the additional line does not quickly reset, or following the operation of the relative parking brake, the solenoid valve itself places the first command channel 32 in communication with the connecting channel 38, thereby enabling the work fluid contained in the thrust chamber 28 to be drained off and enabling the second distributor element 27 to shift to the emergency position. As described above, such shift involves the operation of the automatic and/or parking brake of the trailer.

In the embodiment shown in Figure 5, on the other hand, the first command channel 32 is constantly in communication with the secondary gap 23 and the solenoid valve 34 which, in normal operating condition (i.e., with the engine of the towing vehicle running) keeps the first command channel 32 isolated from the exhaust gap 5, and is able to place the first command channel 32 in communication with the exhaust gap itself following the switching off of the engine of the towing vehicle or following the operation of its parking brake, in such a way as to drain the work fluid coming from the secondary gap 23 and allow the operation of the automatic and/or parking brake of the trailer.

The exhaust connection of the work fluid contained in the thrust chamber 28 can also be obtained in the following ways: by means of the manual operation of the second valve means 35, by means of the connection of an external user point to the auxiliary port 50, by means of the third valve means 36 following a drop in pressure generated by the loss of the work fluid along the first line 7, or by the reaching of the braking position by the first distributor element 9 following the lack of supply of the work fluid from the main gap 4.

More in particular, in the case of the pressure drop of the work fluid occurring along the first line 7, the actuator element 42 shifts until it contacts the shutter 36a, in such a way as to place the second command channel 33 in communication with the exhaust channel 44 and, therefore, with the exhaust gap 5.

In the event of its not being possible, following the braking of the towing vehicle, to achieve the braking of the trailer due to the lack of supply of the fluid under pressure through the main gap 4, the first distributor element 9 performs an overrun towards the abutment element 18 and moves to the emergency position thus placing the emergency gap 46, and consequently also the first command channel 32 through the intermediate channel 48, in communication with the exhaust gap 5.

It has in practice been ascertained that the described invention achieves the intended objects and in particular the fact is underlined that the device to which the present invention refers allows the operation of the automatic and/or parking brake of the trailer in any emergency condition.

In particular, the presence of a solenoid valve operatively connected to the control system of the engine of the towing vehicle also permits operating the automatic and/or parking brake of the trailer also in the event of the switching off of the engine of the towing vehicle not resulting in the automatic pressure reset along the additional line.

Again, the device to which the present invention refers allows the emergency braking of the trailer in three distinct conditions, i.e., in case of no supply of work fluid through the main gap, in case of leaks along the braking system of the trailer or in the case of mechanical command by means of the handbrake lever.

## Claims

1. Device (1) for controlling the braking of a trailer, comprising
- a body (2) wherein is formed at least a first seat (3) communicating with at least a main gap (4) connectable to a source of a work fluid at a first pressure, with at least an exhaust gap (5) of the work fluid, with at least a braking gap (6) communicating with a first line (7) connectable to the braking system of a trailer;
- at least a first distributor element (9) housed in a sliding manner within said first seat (3) and movable between at least an idle position, wherein said braking gap (6) is placed in communication with said exhaust gap (5), and at least a braking position, wherein said main gap (4) is placed in communication with said braking gap (6);
- piloting means (10) of said first distributor element (9) connectable to the braking system of a towing vehicle;
**characterized by** the fact that it comprises:
- at least a second seat (22) formed in said body (2) and communicating with at least a secondary gap (23) connectable to a source of the work fluid at a second pressure, with said exhaust gap (5) and with at least an additional gap (25) communicating with a second line (26) connectable to the automatic and/or parking brake of the trailer;
- at least a second distributor element (27) housed in a sliding manner within said second seat (22) and movable between a normal operating position, wherein said additional gap (25) is placed in communication with said secondary gap (23), and an emergency position, wherein said additional gap (25) is placed in communication with said exhaust gap (5);
and **characterized by** the fact that it comprises command means (31) of the shift of said second distributor element (27) from said normal operating position to said emergency position.

2. Device (1) according to claim 1, **characterized by** the fact that on said second distributor element (27) act, on opposite sides, a thrust chamber (28) and a contrast chamber (29), where within the latter are housed elastic means (30) able to push the second distributor element itself towards the emergency position, and by the fact that said command means (31) comprise at least a command channel (32, 33) communicating with said thrust chamber (28), connectable to said secondary gap (23) and to said exhaust gap (5), and valve means (34, 35, 36, 9) operable at least to place said command channel (32, 33) in communication with said exhaust gap (5) so as to permit the shift of said second distributor element (27) to the emergency position.

3. Device (1) according to claim 2, **characterized by** the fact that it comprises a supply channel (37) communicating with said secondary gap (23) and by the fact that said command means (31) comprise a first command channel (32) communicating with said thrust chamber (28) and first valve means (34) operable to selectively place said first command channel (32) in communication with said supply channel (37) or with said exhaust gap (5).

4. Device (1) according to claim 2, **characterized by** the fact that said command means (31) comprise a first command channel (32) directly communicating with said secondary gap (23) and first valve means (34) operable to place said first command channel (32) in communication with said exhaust gap (5).

5. Device (1) according to one or more of the preceding claims, **characterized by** the fact that it comprises at least a narrowing (39) interposed between said secondary gap (23) and said thrust chamber (28).

6. Device (1) according to one or more of claims 2 to 5, **characterized by** the fact that said first valve means (34) are of the type of a solenoid valve operatively connectable to at least one of the engine or the parking brake of the towing vehicle and able to place said first command channel (32) in communication with said exhaust gap (5) following the stop of the engine itself or the operation of the parking brake.

7. Device (1) according to one or more of the preceding claims, **characterized by** the fact that said command means (31) comprise at least second valve means (35) manually operable to place said first command channel (32) in communication with said exhaust gap (5).

8. Device (1) according to one or more of the preceding claims, **characterized by** the fact that said body (2) has an auxiliary port (50) communicating with said first command channel (32) and connectable to an external user point for the drainage of the work fluid coming from said secondary gap (23).

9. Device (1) according to one or more of claims 2 to 8, **characterized by** the fact that said command means (31) comprise third valve means (36) operable to place said thrust chamber (28) in communication with said exhaust gap (5) following the reaching of a predefined pressure drop along said first line (7) generated by the flow rate of the work fluid towards the trailer.

10. Device (1) according to claim 9, **characterized by** the fact that said command means (31) comprise
at least a third seat (41) within which is housed sliding at least an actuator element (42) which splits the third seat itself into a first chamber (41a) communicating with a first length (7a) of said first line (7) and a second chamber (41b) communicating with a second length (7b) of said first line (7) arranged downstream of said first length (7a) and between which is interposed at least a calibrated orifice (43),
at least a second command channel (33) communicating with said thrust chamber (28) and at least an exhaust channel (44) communicating with said exhaust gap (5),
said third valve means (36) being able to place in communication/isolate said second command channel (33) with/from said exhaust channel (44),
and said actuator element (42) being able to shift, in contrast to elastic means (49) arranged in said second chamber (41b), from an inactive position to an active position, wherein it intervenes on said third valve means (36) to place said second command channel (33) in communication with said exhaust channel (44) following the reaching of a predefined pressure difference between said first and second length (7a, 7b).

11. Device (1) according to claim 10, **characterized by** the fact that said third valve means (36) comprise at least a shutter (36a) protruding into said second chamber (41b) and able to be intercepted by said actuator element (42) in its shift from the inactive position to the active position so as to place said second command channel (33) in communication with said exhaust channel (44).

12. Device (1) according to claim 11, **characterized by** the fact that it comprises at least a separation element (45) interposed between said second and said third seat (22, 41) and by the fact that said shutter (36a) is inserted sealed in a sliding manner inside said separation element (45).

13. Device (1) according to one or more of the claims 10 to 12, **characterized by** the fact that it comprises at least a narrowing (52) interposed between said first length (7a) and said first chamber (41a) and/or between said second length (7b) and said second chamber (41b).

14. Device (1) according to one or more of the preceding claims, **characterized by** the fact that said first seat (3) comprises at least an emergency gap (46), by the fact that said command means (31) comprise at least an intermediate channel (48) interposed between said emergency gap (46) and said first command channel (32), and by the fact that said first distributor element (9) has an emergency position wherein said emergency gap (46) is placed in communication with said exhaust gap (5), said first distributor element (9) defining fourth valve means of said command means (31).

15. Device (1) according to claim 14, **characterized by** the fact that it comprises at least an abutment element (18) arranged inside said first seat (3) and against which said first distributor element (9) rests in its stroke to the emergency position and by the fact that it comprises further elastic means (47) acting on said abutment element (18) to counteract the shift of the first distributor element itself towards the emergency position.

## Patentansprüche

1. Vorrichtung (1) zum Steuern des Bremsens eines Anhängers, die umfasst:
- einen Körper (2), in dem mindestens ein erster Sitz (3) geformt ist, der in Verbindung steht mit mindestens einem Hauptspalt (4), der verbunden werden kann mit einer Quelle von Arbeitsfluid mit einem ersten Druck, mit mindestens einem Ausgabespalt (5) des Arbeitsfluids, mit mindestens einem Bremsspalt (6), der mit einer ersten Leitung (9) in Verbindung steht, die mit der Bremsanlage eines Anhängers verbunden werden kann,
- mindestens ein erstes Verteilerelement (9), das auf eine verschiebbare Weise innerhalb des ersten Sitzes (3) untergebracht ist und zwischen mindestens einer Ruhestellung, in welcher der Bremsspalt (6) in Verbindung mit dem Ausgabespalt (5) gebracht ist, und mindestens einer Bremsstellung, in welcher der Hauptspalt (4) in Verbindung mit dem Bremsspalt (6) gebracht ist, beweglich ist,
- Ansteuerungsmittel (10) des ersten Verteilerelements (9), die mit der Bremsanlage eines Zugfahrzeugs verbunden werden können,
**dadurch gekennzeichnet, dass** sie umfasst:
- mindestens einen zweiten Sitz (22), der in dem Körper (2) geformt ist und in Verbindung steht mit mindestens einem sekundären Spalt (23), der verbunden werden kann mit einer Quelle des Arbeitsfluids mit einem zweiten Druck, mit dem Ausgabespalt (5) und mit mindestens einem zusätzlichen Spalt (25), der in Verbindung steht mit einer zweiten Leitung (26), die mit der automatischen und/oder der Feststellbremse des Anhängers verbunden werden kann,
- mindestens ein zweites Verteilerelement (27), das auf eine verschiebbare Weise innerhalb des zweiten Sitzes (22) untergebracht ist und zwischen einer normalen Betriebsstellung, in welcher der zusätzliche Spalt (25) in Verbindung mit dem sekundären Spalt (23) gebracht ist, und einer Notstellung, in welcher der zusätzliche Spalt (25) in Verbindung mit dem Ausgabespalt (5) gebracht ist, beweglich ist,
und **dadurch gekennzeichnet, dass** sie Befehlsmittel (31) der Umschaltung des zweiten Verteilerelements (27) von der normalen Betriebsstellung zu der Notstellung umfasst.

2. Vorrichtung (1) nach Anspruch 1, **dadurch gekennzeichnet, dass** auf das zweite Verteilerelement (27), auf entgegengesetzten Seiten, eine Druckkammer (28) und eine Gegensatzkammer (29) einwirken, wobei innerhalb der letzteren elastische Mittel (30) untergebracht sind, die dazu in der Lage sind, das zweite Verteilerelement selbst zu der Notstellung hin zu drücken, und dadurch, dass die Befehlsmittel (31) mindestens einen Befehlskanal (32, 33)umfassen, der in Verbindung mit der Druckkammer (28) steht, mit dem sekundären Spalt (23) und dem Ausgabespalt (5)verbunden werden kann, und Ventilmittel (34, 35, 36, 9), die betätigt werden können, um mindestens den Befehlskanal (32, 33) in Verbindung mit dem Ausgabespalt (5) zu setzen, um so die Umschaltung des zweiten Verteilerelements (27) zu der Notstellung zu ermöglichen.

3. Vorrichtung (1) nach Anspruch 2, **dadurch gekennzeichnet, dass** sie einen Versorgungskanal (37) umfasst, der in Verbindung mit dem sekundären Spalt (23) steht, und dadurch, dass die Befehlsmittel (31) einen ersten Befehlskanal (32), der in Verbindung mit der Druckkammer (28) steht, und erste Ventilmittel (34), die betätigt werden können, um selektiv den ersten Befehlskanal (32) in Verbindung mit dem Versorgungskanal (37) oder mit dem Ausgabespalt (5) zu setzen, umfassen.

4. Vorrichtung (1) nach Anspruch 2, **dadurch gekennzeichnet, dass** die Befehlsmittel (31) einen ersten Befehlskanal (32), der unmittelbar in Verbindung mit dem sekundären Spalt (23) steht, und erste Ventilmittel (34), die betätigt werden können, um den ersten Befehlskanal (32) in Verbindung mit dem Ausgabespalt (5) zu setzen, umfassen.

5. Vorrichtung (1) nach einem oder mehreren der vorhergehenden Ansprüche, **dadurch gekennzeichnet, dass** sie mindestens eine Verengung (39) umfasst, die zwischen dem sekundären Spalt (23) und der Druckkammer (28) eingefügt ist.

6. Vorrichtung (1) nach einem oder mehreren der Ansprüche 2 bis 5, **dadurch gekennzeichnet, dass** die ersten Ventilmittel (34) von der Art eines Magnetventils sind, die wirksam mit mindestens einem von dem Motor oder der Feststellbremse des Zugfahrzeugs verbunden werden können und dazu in der Lage sind, anschließend an das Anhalten des Motors selbst oder die Betätigung der Feststellbremse den ersten Befehlskanal (32) in Verbindung mit dem Ausgabespalt (5) zu setzen.

7. Vorrichtung (1) nach einem oder mehreren der vorhergehenden Ansprüche, **dadurch gekennzeichnet, dass** die Befehlsmittel (31) mindestens zweite Ventilmittel (35) umfassen, die manuell betätigt werden können, um den ersten Befehlskanal (32) in Verbindung mit dem Ausgabespalt (5) zu setzen.

8. Vorrichtung (1) nach einem oder mehreren der vorhergehenden Ansprüche, **dadurch gekennzeichnet, dass** der Körper (2) einen Hilfsanschluss (50) hat, der in Verbindung mit dem ersten Befehlskanal (32) steht und mit einem äußeren Benutzerpunkt zum Ablassen des Arbeitsfluids, das von dem sekundären Spalt (23) kommt, verbunden werden kann.

9. Vorrichtung (1) nach einem oder mehreren der Ansprüche 2 bis 8, **dadurch gekennzeichnet, dass** die Befehlsmittel (31) dritte Ventilmittel (36) umfassen, die betätigt werden können, um anschließend an das Erreichen eines vordefinierten Druckabfalls entlang der ersten Leitung (7), der durch die Durchflussmenge des Arbeitsfluids zu dem Anhänger hin erzeugt wird, die Druckkammer (28) in Verbindung mit dem Ausgabespalt (5) zu setzen.

10. Vorrichtung (1) nach Anspruch 9, **dadurch gekennzeichnet, dass** die Befehlsmittel (31) umfassen:
mindestens einen dritten Sitz (41), innerhalb dessen gleitend mindestens ein Stellelement (42) untergebracht ist, das den dritten Sitz selbst teilt in eine erste Kammer (41a), die in Verbindung steht mit einer ersten Länge (7a) der ersten Leitung (7), und eine zweite Kammer (41b), die in Verbindung steht mit einer zweiten Länge (7b) der ersten Leitung (7), die stromabwärts von der ersten Länge (7a) angeordnet ist, und zwischen denen mindestens eine geeichte Öffnung (43) eingefügt ist,
mindestens einen zweiten Befehlskanal (33), der in Verbindung steht mit der Druckkammer (28) und mindestens einen Ausgabekanal (44), der in Verbindung steht mit dem Ausgabespalt (5),
wobei die dritten Ventilmittel (36) dazu in der Lage sind, den zweiten Befehlskanal (33) mit/von dem Ausgabekanal (44) zu verbinden/zu isolieren, und
und das Stellelement (42) dazu in der Lage ist, im Gegensatz zu elastischen Mitteln (49), die in der zweiten Kammer (41b) angeordnet sind, von einer inaktiven Stellung zu einer aktiven Stellung umzuschalten, wobei es an den dritten Ventilmitteln (36) eingreift, um anschließend an das Erreichen eines vordefinierten Druckunterschieds zwischen der ersten und der zweiten Länge (7a, 7b) den zweiten Befehlskanal (33) in Verbindung mit dem Ausgabekanal (44) zu setzen.

11. Vorrichtung (1) nach Anspruch 10, **dadurch gekennzeichnet, dass** die dritten Ventilmittel (36) mindestens einen Verschluss (36a) umfassen, der in die zweite Kammer (41b) vorspringt und dazu in der Lage ist, durch das Stellelement (42) bei seiner Umschaltung von der inaktiven Stellung zu der aktiven Stellung abgestellt zu werden, um so den zweiten Befehlskanal (33) in Verbindung mit dem Ausgabekanal (44) zu setzen.

12. Vorrichtung (1) nach Anspruch 11, **dadurch gekennzeichnet, dass** sie mindestens ein Trennelement (45) umfasst, das zwischen dem zweiten und dem dritten Sitz (22, 41) eingefügt ist, und dadurch, dass der Verschluss (36a) abgedichtet auf eine gleitende Weise innerhalb des Trennelements (45) eingesetzt ist.

13. Vorrichtung (1) nach einem oder mehreren der Ansprüche 10 bis 12, **dadurch gekennzeichnet, dass** sie mindestens eine Verengung (52) umfasst, die zwischen der ersten Länge (7a) und der ersten Kammer (41a) und/oder zwischen der zweiten Länge (7b) und der zweiten Kammer (41b) eingefügt ist.

14. Vorrichtung (1) nach einem oder mehreren der vorhergehenden Ansprüche, dadurch, dass der erste Sitz (3) mindestens einen Notspalt (46) umfasst, dadurch, dass die Befehlsmittel (31) mindestens einen Zwischenkanal (48), der zwischen dem Notspalt (46) und dem ersten Befehlskanal (32) eingefügt ist, umfassen, und dadurch, dass das erste Verteilerelement (9) eine Notstellung hat, in welcher der Notspalt (46) in Verbindung mit dem Ausgabespalt (5) gesetzt wird, wobei das erste Verteilerelement (9) vierte Ventilmittel der Befehlsmittel (31) definiert.

15. Vorrichtung (1) nach Anspruch 14, **dadurch gekennzeichnet, dass** sie mindestens ein Widerlagerelement (18) umfasst, das innerhalb des ersten Sitzes (3) angeordnet ist und an dem das erste Verteilerelement (9) in seinem Hub zu der Notstellung aufliegt, und dadurch, dass sie ferner elastische Mittel (47) umfasst, die auf das Widerlagerelement (18) einwirken, um der Umschaltung des ersten Verteilerelements selbst zu der Notstellung hin entgegenzuwirken.

## Revendications

1. Dispositif (1) pour contrôler le freinage d'une remorque, comprenant
- un corps (2) dans lequel est formé au moins un premier siège (3) communiquant avec au moins un premier espace principal (4) pouvant être raccordé à une source de fluide de travail à une première pression, au moins un espace d'échappement (5) du fluide de travail, au moins un espace de freinage (6) communiquant avec une première conduite (7) pouvant être raccordée au système de freinage de la remorque,
- au moins un premier élément distributeur (9) logé de façon coulissante à l'intérieur dudit premier siège (3) et mobile entre une position de repos, dans lequel ledit espace de freinage (6) est placé en communication avec ledit espace d'échappement (5), et au moins une position de freinage, dans laquelle ledit espace principal (4) est placé en communication avec ledit espace de freinage (6),
- des moyens de pilotage (10) dudit premier élément distributeur (9) pouvant être raccordés au système de freinage d'un véhicule tracteur,
**caractérisé en ce qu'**il comprend:
- au moins un deuxième siège (22) formé dans ledit corps (2) et communicant avec au moins un espace secondaire (23) pouvant être raccordé à une source de fluide de travail à une deuxième pression, avec au moins un espace complémentaire (25) communicant avec une deuxième conduite (26) pouvant être raccordée au frein automatique et/ou de stationnement de la remorque,
- au moins un deuxième élément distributeur (27) logé de façon coulissante à l'intérieur dudit deuxième siège (22) et mobile entre une position de fonctionnement normal, dans laquelle ledit espace complémentaire (25) est placé en communication avec ledit espace secondaire (23), et une position d'urgence, dans laquelle ledit espace complémentaire (25) est placé en communication avec ledit espace d'échappement (5),
et **caractérisé en ce qu'**il comprend des moyens de commande (31) du passage dudit deuxième élément distributeur (27) de ladite position de fonctionnement normal à ladite position d'urgence.

2. Dispositif (1) selon la revendication 1, **caractérisé en ce que** sur ledit deuxième élément distributeur (27) agissent, sur des côtés opposés, une chambre de poussée (28) et une chambre de contraste (29), où dans cette dernière sont logés des moyens élastiques (30) pouvant pousser le deuxième élément distributeur vers la position d'urgence, et **en ce que** lesdits moyens de commande (31) comprennent au moins un canal de commande (32, 33) communicant avec ladite chambre de poussée (28), pouvant être raccordé audit espace secondaire (23) et audit espace d'échappement (5), et des moyens de clapets (34, 35, 36, 9) pouvant être actionnés au moins pour placer ledit canal de commande (32, 33) en communication avec ledit espace d'échappement (5) afin de permettre le passage dudit deuxième élément distributeur (27) en position d'urgence.

3. Dispositif (1) selon la revendication 2, **caractérisé en ce qu'**il comprend un canal d'alimentation (37) communicant avec ledit espace secondaire (23) et **en ce que** lesdits moyens de commande (31) comprennent un premier canal de commande (32) communicant avec ladite chambre de poussée (37) ou avec ledit espace d'échappement (5).

4. Dispositif (1) selon la revendication 2, **caractérisé en ce que** lesdits moyens de commande (31) comprennent un premier canal de commande (32) communicant directement avec ledit espace secondaire (23) et un premier moyen de clapet (34) pouvant être actionné pour placer ledit premier canal de commande (32) en communication avec ledit espace d'échappement (5).

5. Dispositif (1) selon l'une ou plusieurs des revendications précédentes, **caractérisé en ce qu'**il comprend au moins un rétrécissement (39) interposé entre ledit espace secondaire (23) et ladite chambre de poussée (28).

6. Dispositif (1) selon l'une ou plusieurs des revendications 2 à 5, **caractérisé en ce que** ledit premier moyen de clapet (34) est de type électrovalve pouvant être raccordée de manière fonctionnelle à au moins l'un du moteur ou du frein de stationnement du véhicule tracteur et pouvant placer ledit premier canal de commande (32) en communication avec ledit espace d'échappement (5) à la suite de l'arrêt du moteur ou du fonctionnement du frein de stationnement.

7. Dispositif (1) selon l'une ou plusieurs des revendications précédentes, **caractérisé en ce que** lesdits moyens de commande (31) comprennent au moins un deuxième moyen de clapet (35) pouvant être actionné manuellement pour placer ledit premier canal de commande (32) en communication avec ledit espace d'échappement (5).

8. Dispositif (1) selon l'une ou plusieurs des revendications précédentes, **caractérisé en ce que** ledit corps (2) possède une entrée auxiliaire (50) communicant avec ledit premier canal de contrôle (32) et pouvant être raccordée à un point d'utilisateur externe pour le drainage du fluide de travail venant dudit espace secondaire (23).

9. Dispositif (1) selon l'une ou plusieurs des revendications 2 à 8, **caractérisé en ce que** lesdits moyens de commande (31) comprennent un troisième moyen de clapet (36) pouvant être actionné pour placer ladite chambre de poussée (28) en communication avec ledit espace d'échappement (5) après avoir atteint une chute de pression prédéfinie le long de ladite première conduite (7) produite par le débit du fluide de travail vers la remorque.

10. Dispositif (1) selon l'une ou plusieurs des revendications précédentes, **caractérisé en ce que** lesdits moyens de commande (31) comprennent
au moins un troisième siège (41) à l'intérieur duquel est logé de façon coulissante au moins un élément actionneur (42) divisant le troisième siège lui-même en une première chambre (41a) communicant avec un premier segment (7a) de ladite première conduite (7) et une deuxième chambre (41b) communicant avec un deuxième segment (7b) de ladite première conduite (7) disposé en aval dudit premier segment (7a) et entre lesquels est interposé au moins un orifice calibré (5),
ledit troisième moyen de clapet (36) pouvant placer en communication/isoler ledit deuxième canal de commande (33) avec ledit/dudit canal d'échappement (44),
et ledit élément actionneur (42) pouvant passer, contrairement aux éléments élastiques (49) disposés dans ladite deuxième chambre (41b), d'une position inactive à un position active, où il intervient sur ledit troisième moyen de clapet (36) pour placer ledit deuxième canal de commande (33) en communication avec ledit canal d'échappement (44) après avoir atteint une différence de pression prédéterminée entre lesdits premier et deuxième segments (7a, 7b).

11. Dispositif (1) selon la revendication 10, **caractérisé en ce que** ledit troisième moyen de clapet (36) comprend au moins un volet (36a) faisant saillie dans ladite deuxième chambre (41b) et pouvant être intercepté par ledit élément actionneur (42) lors de son passage de la position inactive à la position active afin de placer ledit deuxième canal de commande (33) en communication avec ledit canal d'échappement (44).

12. Dispositif (1) selon la revendication 11, **caractérisé en ce qu'**il comprend au moins un élément de séparation (45) interposé entre ledit deuxième et ledit troisième sièges (22, 41) et **en ce que** ledit volet (36a) est inséré et scellé de façon coulissante à l'intérieur dudit élément de séparation (45).

13. Dispositif(1) selon l'une ou plusieurs des revendications 10 à 12, **caractérisé en ce qu'**il comprend au moins un rétrécissement (52) interposé entre ledit premier segment (7a) et ladite première chambre (41a) et/ou entre ledit deuxième segment (7b) et ladite deuxième chambre (41b).

14. Dispositif (1) selon l'une ou plusieurs des revendications précédentes, **caractérisé en ce que** le premier siège (3) comprend au moins un espace d'urgence (46), **en ce que** lesdits moyens de commande (31) comprennent au moins un canal intermédiaire (48) interposé entre ledit espace d'urgence (46) et ledit premier canal de commande (32), et **en ce que** ledit premier élément distributeur (9) possède une position d'urgence dans laquelle ledit espace d'urgence (46) est placé en communication avec ledit espace d'échappement (5), ledit premier élément distributeur (9) délimitant un quatrième moyen de clapet desdits moyens de commande (31).

15. Dispositif (1) selon la revendication 14, **caractérisé en ce qu'**il comprend au moins un élément de butée (18) disposé à l'intérieur dudit premier siège (3) et contre lequel ledit premier élément distributeur (9) repose dans sa course vers la position d'urgence et **en ce qu'**il comprend d'autres moyens élastiques (47) agissant sur ledit élément de butée (18) pour contrer le passage du premier élément distributeur en position d'urgence.
